Europäisches Patentamt

**European Patent Office**

**Office européen des brevets**

(11) Publication number: **0 133 039**
**A1**

(12) **EUROPEAN PATENT APPLICATION**

(21) Application number: **84305137.6**

(22) Date of filing: **27.07.84**

(51) Int. Cl.⁴: **F 24 H 1/40**
**F 24 H 9/00, F 28 F 1/14**

(30) Priority: **27.07.83 GB 8320277**

(43) Date of publication of application:
**13.02.85 Bulletin 85/7**

(84) Designated Contracting States:
**DE FR GB IT NL SE**

(71) Applicant: **BRITISH ALCAN ALUMINIUM LIMITED**
**Chalfont Park Gerrards Cross**
**Buckinghamshire SL9 0QB(GB)**

(72) Inventor: **Simpson, Victor John**
**Tally-Ho Onslow Road Burwood Park**
**Walton-on-Thames Surrey, KT12 5BA(GB)**

(74) Representative: **Boydell, John Christopher et al,**
**Stevens, Hewlett & Perkins 5 Quality Court Chancery**
**Lane**
**London, WC2A 1HZ(GB)**

(54) **Improvements in heating boilers.**

㊗ A heating boiler comprising a pair of manifolds 4, 5 between which extend finned tubes 14 to 21 through which water to be heated may pass. The fins on the tubes extend axially and, in the case of tubes 14 to 19, are perforated in such a way as to allow hot combustion products from a gas burner assembly 32 to pass through the fins. The finned tubes are arranged across the combustion chamber to form an effective barrier through which the combustion products must pass, thus ensuring efficient transfer of heat to the water within the tubes.

FIG.2

Croydon Printing Company Ltd.

## "IMPROVEMENTS IN HEATING BOILERS"

This invention relates to heating boilers of the type used for heating water to be passed to space heating radiators and/or hot water cylinders. The boiler of the invention may be oil or gas fired but, for convenience, reference will be made hereinafter only to gas fired types.

The invention is concerned primarily with high thermal efficiency boilers including boilers operating at efficiences at which the latent heat of the flue gas may be recovered by condensation methods. Such boilers require to employ a heat exchanger having a large surface area in order to absorb the heat from the combustion products at diminished temperature difference. It has been common practice to attach fins to the surface of water conduits to absorb this heat and transfer it to the water within the conduits. Construction has commonly been in cast iron with a cored waterway or copper tube with plate fins to provide the additional surface area on the gaseous side of the heat exchanger.

The present invention seeks to provide a boiler having improved performance with the possibility of lower weight and smaller physical dimensions over known boilers.

In accordance with the invention there is provided a heating boiler comprising a casing, a plurality of extruded finned tubes extending within said casing, each tube having at least one axially extending fin, means for passing water to be heated through said tubes, and a burner assembly for heating the water within said tubes, the boiler being characterised in that the fins on said tubes are perforated in such a way as to allow combustion products from the burner assembly to pass therethrough whereby to enhance the transfer of heat to the water.

The fins, being formed axially of the tubes, enable the tubes to be formed conveniently by extrusion, for example in aluminium or an alloy thereof.  Any convenient number of such fins may be included and, indeed, some additional unperforated fins may be included in some circumstances.  In a preferred embodiment two fins are used, these extending in opposite directions away from the centre of the tube when seen in section.  This two-finned tube can be joined fin tip to fin tip with adjacent tubes to form a barrier across the casing which has the effect of dividing the interior of the casing into a combustion chamber and an exhaust chamber.  Combustion products can pass through the barrier from combustion chamber to exhaust chamber only by passing through the perforated fins, thus ensuring very effective heat transfer to the water as they do so.

The perforations in the fins of the finned tubes can be formed in a variety of ways.  A plurality of simple holes can be drilled or punched in the fins. However, this is disadvantageous in that the loss of fin material impairs the flow of heat within the fins and could lead to local overheating.  A better way is to form the perforations as a plurality of press outs in the metal of the fins - i.e. no material is lost from the fins - in such a way as to form louvre or lattice perforations.  Louvre perforations are currently preferred since they can readily be advantageously angled to take maximum advantage of the direction of flow of the combustion products as they pass through the fins.  Such angling of the pressed out portions is preferably carried out with a view to causing as much turbulence as possible in the gas flow through the perforations, thus ensuring that the hot combustion products come into intimate and prolonged contact with the fins.

The louvres or lattice perforations may extend axially of the fins, or at an angle thereto. In a preferred embodiment, however, the perforations are formed at right angles to the direction of the fins since this results in maximum disruption to the flow of combustion products through the fins.

In order that the invention may be better understood several embodiments thereof will now be described by way of example only and with reference to the accompanying drawings in which:-

Figure 1 is a part section along the lines I-I of Figure 2 and shows a first embodiment of a heating boiler in accordance with the invention;

Figure 2 is an end section along the lines II-II of Figure 1;

Figure 3 is an end view of the boiler of Figures 1 and 2;

Figure 4 is a view similar to Figure 2 but showing a second embodiment;

Figure 5 is a sectional view of a third embodiment of a heating boiler in accordance with the invention;

Figure 6 is a view, partly in section, along the lines VI-VI of Figure 5;

Figure 7 is a view similar to that of Figure 5 but showing a fourth embodiment of the invention;

Figures 8 and 9 are perspective views of the two forms of extruded tube used in the embodiments of Figures 5 and 7; and

Figure 10 is a perspective view similar to that of Figure 8, but showing an alternative form of perforation.

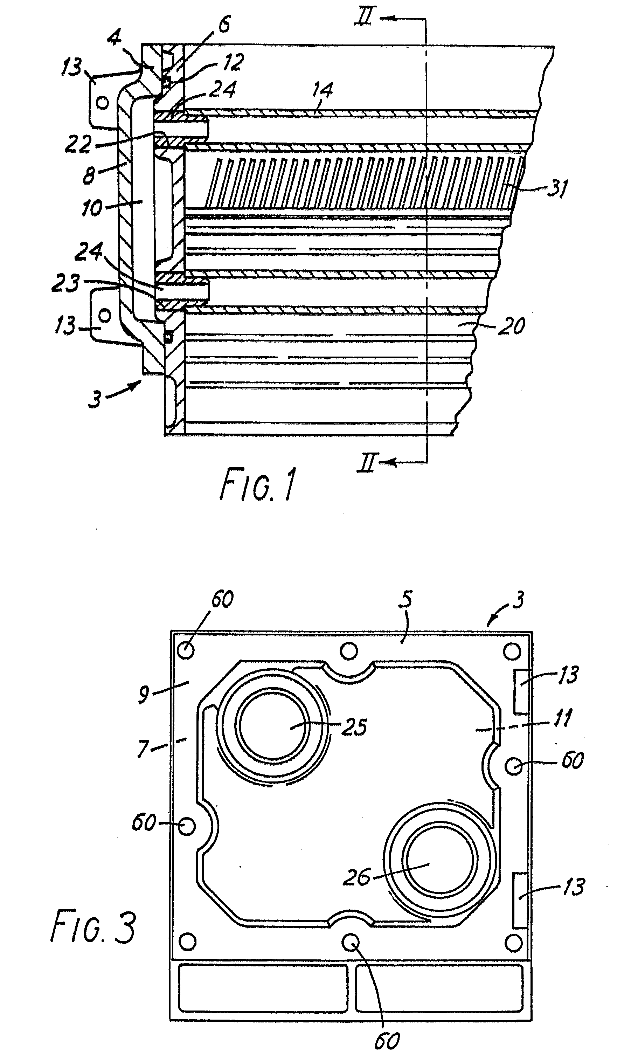

Referring to Figures 1 to 3, the boiler comprises a substantially rectangular casing 1 having vertical side walls 2 and vertical end walls 3. The end walls 3 take the form of respective water manifolds 4, 5 each of which comprises an end plate 6, 7 and cover 8, 9 attached thereto in such a way as to define a water chamber 10, 11 in between. Sealing means, one of which is shown under reference 12, are provided between each end plate and its respective cover. Lugs 13 are attached to the manifolds to enable attachment of the boiler to a vertical surface.

Extending between the end plates within the casing are eight finned tubes 14 to 21. Each tube is arranged to extend between a respective pair of aligned holes in the two end plates. The two visible holes shown in the end plate 6 are indicated under reference numbers 22 (for tube 14) and 23 (for tube 20). A watertight and mechanically stable joint is effected between the ends of each tube and the respective end plate by means of a ferrule 24 which is an interference fit both in the end of the tube and the hole in the end plate. The effect of these ferrules is to hold together the basic structure of the boiler, namely the finned tubes and the manifolds, and further to provide a fluid connection between the manifolds and the tubes. Additional mechanical stability may be provided by through bolts (not shown) passing from manifold to manifold through holes 60.

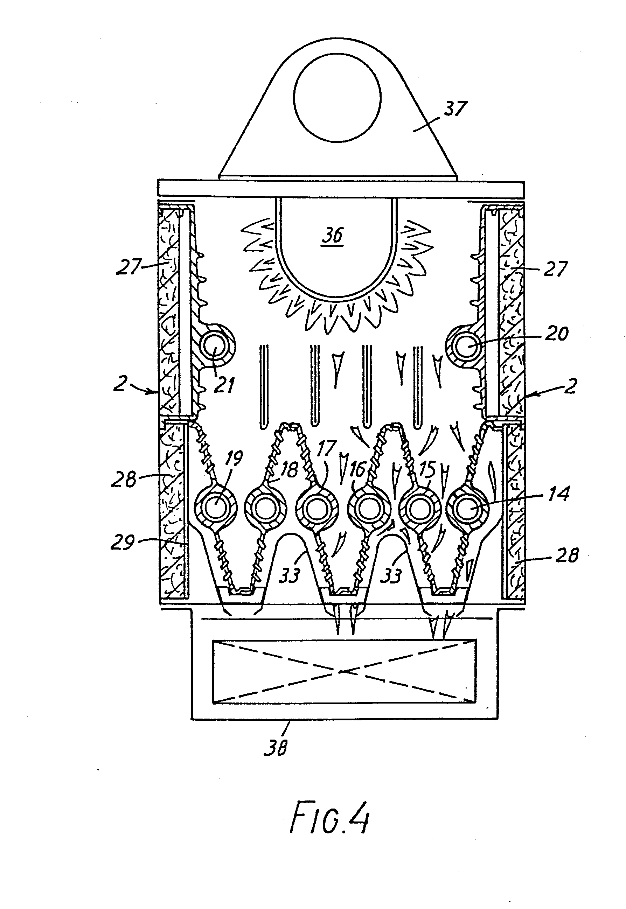

Various water flow arrangements are possible; in the illustrated embodiment water inlet and outlet ports 25 and 26 for the boiler are taken from one manifold 5 (see Figure 3). A horizontal wall (not visible) is formed across the chamber 11 thus splitting the chamber into an inlet and an outlet portion. The chamber 10 is not so split, and thus allows fluid communication between all tubes at the left-hand end of the boiler. Thus, in this arrangement, the cooler inlet water enters at port 25 into the upper part of chamber 11 and flows along tubes 14 to 19 in parallel, across the casing, and back through tubes 20 and 21 in parallel, finally exitting through the outlet port 26.

Two types of finned tubes are used in the illustrated boiler, both types being extruded in aluminium alloy.   Tubes 14 to 19 have perforated fins, to be described in more detail below; tubes 20 and 21 have a generally planar fin formation which actually forms the lower part of the wide walls 2 of the casing. The internally-facing surfaces of the fins on tubes 20 and 21 may advantageously be provided with axially extending protrusions 59 which act both to provide mechanical stiffening and additional heat absorbing surface.   Panels 27 of thermally insulating material are fitted on the exterior side of the tubes 20 and 21, and further panels 28, backed by sheet metal 29 complete the upper part of the walls 2.

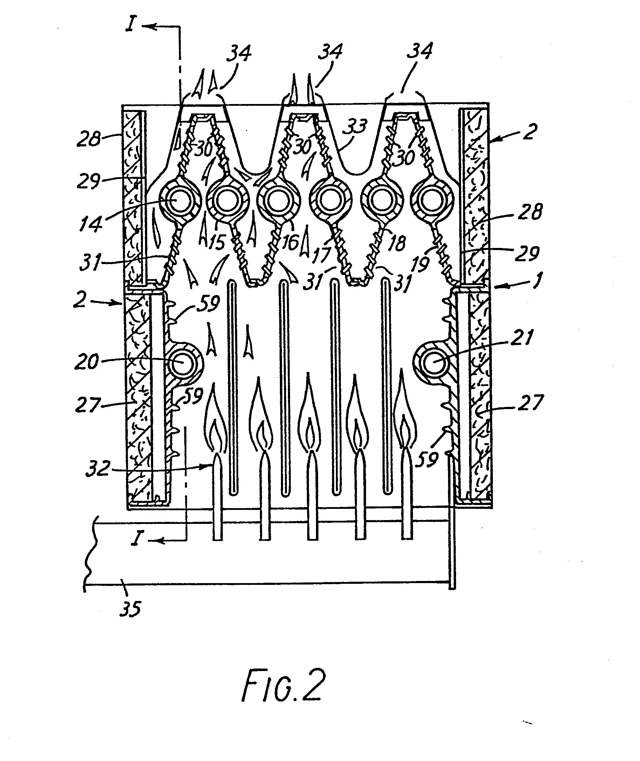

Each finned tube 14 to 19 is equipped with a pair of fins 30, 31 which extend in opposite directions from the centre of the tube when seen in section.   The fin ends are bent to enable them to be fitted to an adjacent fin of the next tube along (see Figure 2) in concertina fashion.   The wall of tubes thus formed extends from one side wall of the casing to the other, and thus effectively forms a barrier across the casing.

A burner 32 fed by a gas conduit 35 is positioned below the barrier and, in order to allow combustion products to pass through the barrier the fins 30, 31 are perforated.   In order to pass from the combustion chamber below the barrier to the exhaust chamber above, combustion products have to pass through the narrow perforations in the fins, thus ensuring an efficient flow of heat from the hot gases to the water within the tubes.   Baffles 33 may be provided above the barrier to further deflect the gases in such a way as to ensure maximum possible heat transfer.   The exhaust gases finally exit at 34 to an exhaust manifold (not shown).

The perforations on the fins may take various forms, as illustrated in the accompanying drawings. It is preferred that no metal be lost as a result of perforating the metal of the fins since this would adversely affect the flow of heat within the fins. Thus louvres or lattice perforations are preferred. Figure 2 shows louvre perforations extending axially of the tube; Figure 1 shows a variation in which the louvres extend at an angle to the axis of the tube. However, other variations are possible as will become apparent from the description of later embodiments.

A variation in the above-described boiler is illustrated in Figure 4. In this boiler, the basic boiler structure is inverted and heat is supplied from above by means of a fan-driven premix downfiring burner 36 supplied via a conduit 37. The flow of combustion products through the tubes 14 to 19 is as before (except downwards rather than upwards) and in this case the exhaust manifold is illustrated under reference 38. The water flow arrangement may be as before, with water flowing initially along tubes 14 to 19 and back through tubes 20 and 21.

The advantage of the boiler shown in Figure 4 is that it may readily operate in the condensing mode by ensuring that the return water feed from the radiators is below the flue gas dew-point. Any condensate which forms on the tubes 14 to 18 as a result may be directed by the baffles 33 into the exhaust manifold 38, and may be drained away.

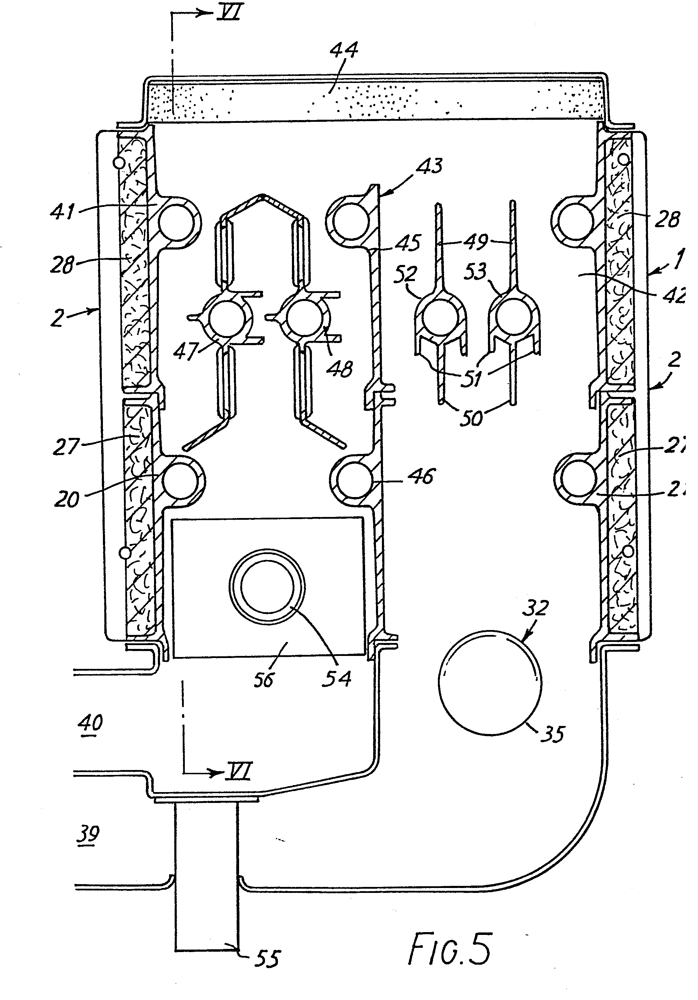

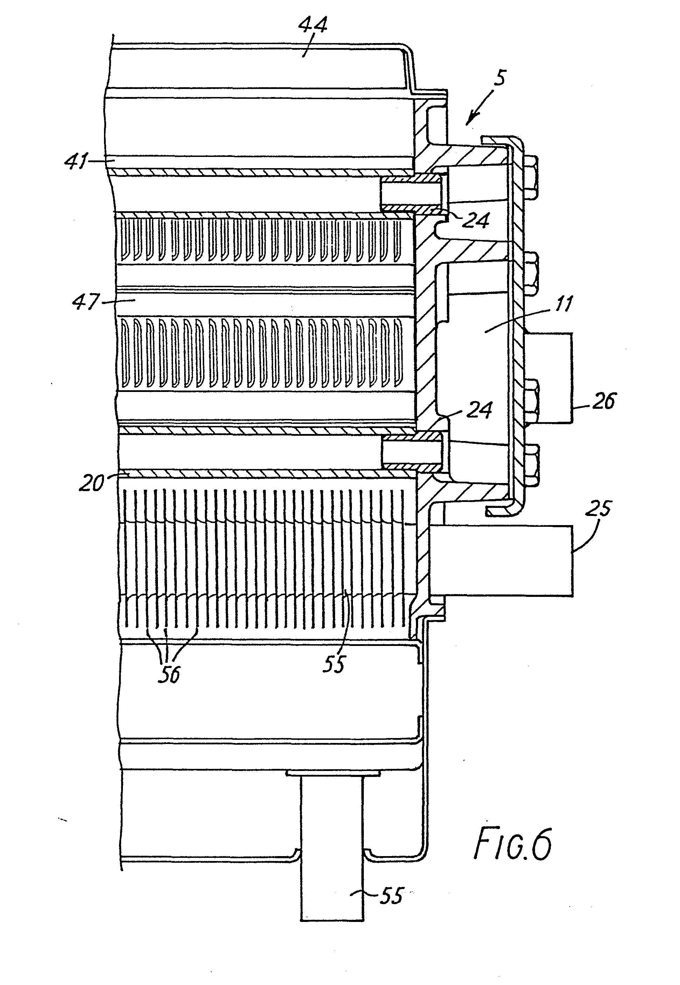

A further embodiment is illustrated in Figures 5 and 6 in which the same reference numerals are used where appropriate. Figures 5 and 6 illustrate a balanced flue boiler in which the combustion air enters at 39 and the exhaust products exit at 40. The side walls 2 of the casing 1 are formed in a similar manner to hitherto, except that the backing sheets 29 of the previous embodiment are replaced by a further pair of finned tubes 41, 42 of similar construction to tubes 20 and 21 described previously.

The interior of the casing is split into two by a vertical partition 43 arranged such that combustion products pass firstly upwards on the right-hand side, thence through a gap left between the top of the partition and an insulated top cover 44 and then downwards on the left hand side, finally exitting through exhaust port 40.

For maximum heat transfer, the partition 43 is itself made up of a pair of finned tubes 45, 46 extending, like tubes 20 and 21, between the manifolds 4, 5 as described above. The fins on these tubes are not perforated, however.

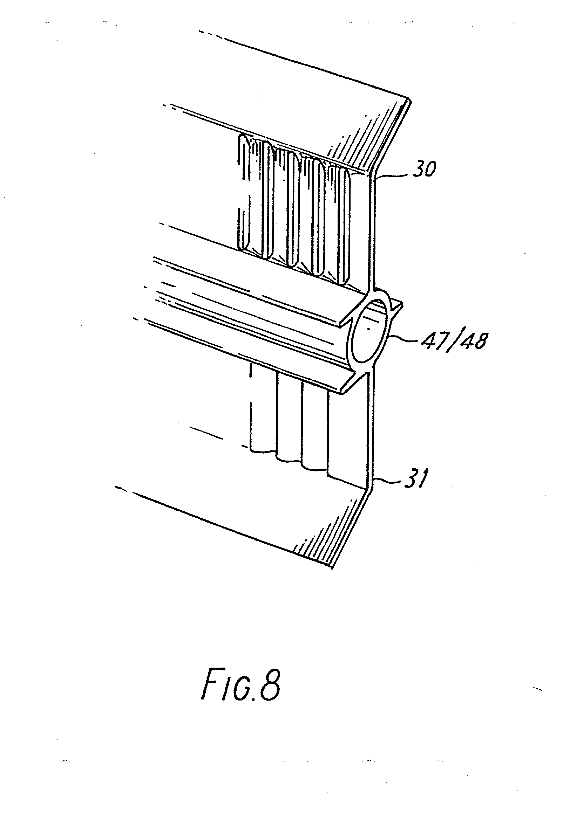

The tubes with perforated fins are present in two forms in the boiler of Figures 5 and 6. On the left hand side of the boiler, a barrier is formed by two tubes 47, 48 in such a manner that all of the products of combustion have to pass through the fins in the same manner as described previously. The illustrated tubes are fitted with pressed-out louvre perforations which extend in a direction at right angles to the axis of the tubes, as shown in more detail in Figure 8. This arrangement of louvres, and their orientation with respect to the flow of combustion products has been found to provide maximum breakup of the flow, thus ensuring intimate contact between the hot gases and the fins.

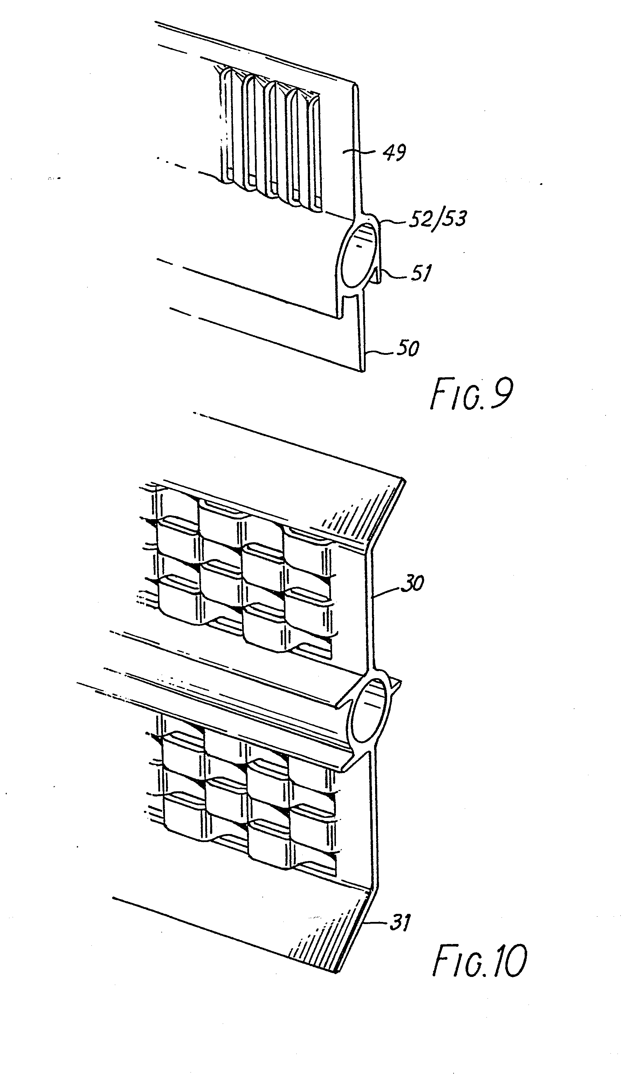

On the right-hand side, a different type of perforated finned tube is used in order to take account of this hotter area of the flow path. This type of tube is shown in greater detail in Figure 9 and will be seen to comprise a single upwardly extending fin 49 which is perforated with louvre perforations in the manner described above and three downwardly extending non-perforated fins 50, 51.   Two such tubes are provided, shown under the reference numerals 52 and 53, and are fitted in the manner described above between the manifolds 4 and 5.

In the direction of flow of combustion products, a final finned tube 54 may optionally be fitted in order to allow the boiler to operate in condensing mode.   The tube 54 communicates with the manifold chamber 10, but not with chamber 11 (see Figure 6) since this tube effectively acts as a preheater for the boiler which will preheat water entering port 25 before passing it to manifold chamber 11.   If the return water is at a temperature lower than the dew point, then the boiler will operate in condensing mode, and any condensate which forms can be drained by means of a drain 55.

The finned tube 54 may be of the extruded type described above and may or may not have perforated fins.   As shown, however, tube 54 is equipped with a plurality of transversely-arranged plate fins 56 in a manner well-known in the art.

Water flow in the boiler of Figures 5 and 6 is firstly through tube 54 into the chamber 10.   From there a variety of arrangements are possible, keeping in mind that the cooler water should, as far as possible, be passed down tubes which are in contact with cooler combustion products.

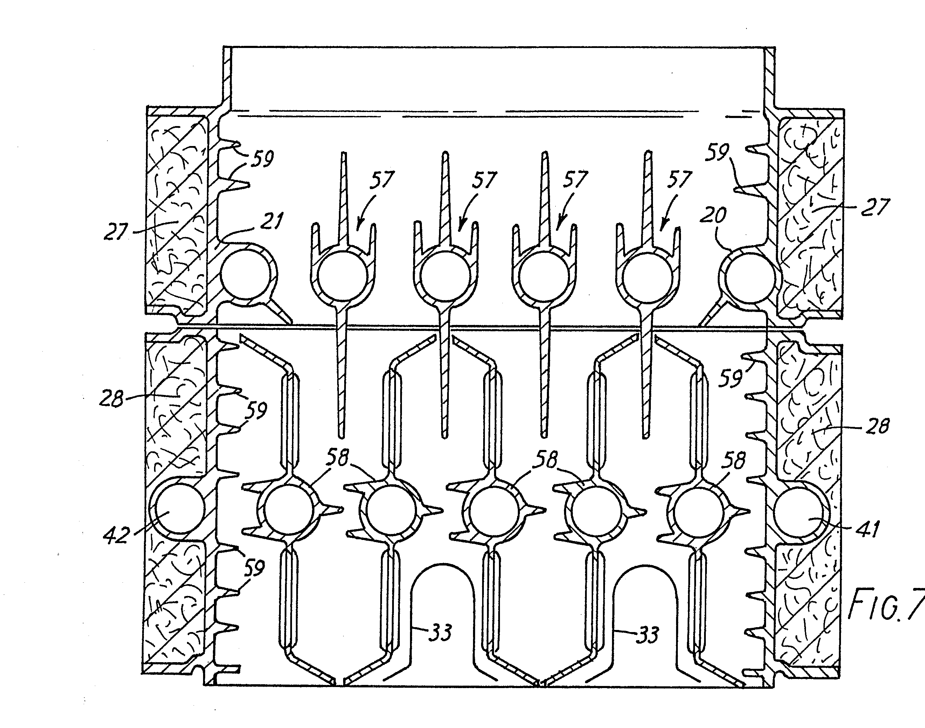

A still further arrangement of finned tubes is shown in Figure 7 which illustrates a boiler intended for a down firing burner (not shown) such as described above in relation to Figure 4.   Combustion products thus flow downwards and condensate forming if and when the boiler is operated in the condensing mode can be collected at the bottom and drained.

All finned tubes are mounted between manifolds 4 and 5 as hitherto.   Closest to the burner are situated four tubes 57 of the type shown in Figure 9 (but inverted) and below this a barrier is formed of five finned tubes 58 of the type shown in Figure 8, these latter being abutted fin tip to fin tip to ensure that all combustion products must pass through the fins in order to travel from the combustion chamber to the exhaust chamber. The manifolds are arranged in such a way as to direct water first through tubes 58 and 41/42 in parallel and thence back through tubes 57 and 20/21 in parallel, but other arrangements are possible. Provided that the return water to tubes 58 is at a temperature below the dew-point of the flue gases, the boiler will readily operate in condensing mode for maximum efficiency.

Figure 10 shows an alternative pattern of perforations in the finned tube of the Figure 8 type, in which the so-called "lattice" perforations are used. Many other patterns are however possible, as will be apparent to those skilled in the art.

## CLAIMS

1. A heating boiler comprising a casing, a plurality of extruded finned tubes extending within said casing, each tube having at least one axially extending fin, means for passing water to be heated through said tubes, and a burner assembly for heating the water within said tubes, the boiler being characterised in that the fins on said tubes are perforated in such a way as to allow combustion products from the burner assembly to pass therethrough whereby to enhance the transfer of heat to the water.

2. A heating boiler as claimed in claim 1 wherein the perforations on the fins of the tubes take the form of a large number of through-holes formed in each fin.

3. A heating boiler as claimed in claim 1 wherein the perforations on the fins of the tubes take the form of a plurality of press-outs in the metal of the fins.

4. A heating boiler as claimed in claim 3 wherein the pressed out portions of the metals form angled louvres.

5. A heating boiler as claimed in any one of the preceding claims wherein the finned tubes are arranged adjacent one another within the casing in such a way as to form a barrier through which combustion products may flow by means of the perforations in said fins.

6. A heating boiler as claimed in claim 5 wherein each finned tube has two fins extending in mutually opposite directions away from the centre of the tube when seen in section, said barrier being constructed by mounting adjacent tubes fin tip to fin tip.

7. A heating boiler as claimed in either one of claims 5 or 6 wherein said barrier is not planar, but takes the general shape of an open concertina with one or more of said finned tubes forming each planar section of the concertina.

8.     A heating boiler as claimed in any one of the preceding claims wherein a plurality of non-perforated finned tubes are additionally provided, said non-perforated tubes being arranged as walls operable to direct the flow of combustion products.

9.     A heating boiler as claimed in claim 8 wherein at least some of said non-perforated tubes are arranged to form the walls of the casing.

0133039

FIG.1

FIG.3

FIG.2

FIG.4

0133039

4/8

FIG.5

FIG.6

0133039

FIG.7

FIG.8

FIG.9

FIG.10

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | CH-A- 220 298 (BECK)<br><br>* Whole document * | 1,2,5,7 | F 24 H 1/40<br>F 24 H 9/00<br>F 28 F 1/14 |
| A | US-A-4 071 934 (ZOLMAN)<br>* Figures * | 1,3 | |
| A | DE-A-2 431 211 (SOCIETE D'APPLICATIONS THERMO-ELECTRIQUES APPLIMO)<br>* Figures * | 1,3 | |
| A | FR-A-2 205 984 (BOUELLAT)<br>* Insgesamt * | 1,8,9 | |

TECHNICAL FIELDS SEARCHED (Int. Cl. ³)

F 24 H
F 28 F

The present search report has been drawn up for all claims

| Place of search THE HAGUE | Date of completion of the search 18-10-1984 | Examiner VAN GESTEL H.M. |
|---|---|---|